(19)

 Europäisches
 Patentamt
 European
 Patent Office
 Office européen
 des brevets

(11) **EP 4 669 010 A1**

(12) **EUROPEAN PATENT APPLICATION**
published in accordance with Art. 153(4) EPC

(43) Date of publication:
 **24.12.2025 Bulletin 2025/52**

(21) Application number: **24733838.7**

(22) Date of filing: **16.02.2024**

(51) International Patent Classification (IPC):
 *H04W 74/08* (2024.01)   *H04W 74/00* (2009.01)
 *H04W 72/04* (2023.01)   *H04W 72/0457* (2023.01)
 *H04W 72/23* (2023.01)   *H04L 27/26* (2006.01)
 *H04W 88/02* (2009.01)

(52) Cooperative Patent Classification (CPC):
 **H04L 27/26; H04W 72/04; H04W 72/0457;**
 **H04W 72/23; H04W 74/00; H04W 74/08;**
 **H04W 88/02**

(86) International application number:
 **PCT/KR2024/095339**

(87) International publication number:
 **WO 2024/172622 (22.08.2024 Gazette 2024/34)**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH MA MD TN**

(30) Priority: **16.02.2023 US 202363446320 P**
 **05.04.2023 US 202363457383 P**
 **12.05.2023 KR 20230062029**
 **06.10.2023 KR 20230133579**

(71) Applicant: **LG Electronics Inc.**
 **Seoul 07336 (KR)**

(72) Inventors:
 • **AHN, Seungjin**
  **Seoul 06772 (KR)**
 • **KIM, Jaehyung**
  **Seoul 06772 (KR)**
 • **YANG, Suckchel**
  **Seoul 06772 (KR)**
 • **LEE, Youngdae**
  **Seoul 06772 (KR)**

(74) Representative: **Frenkel, Matthias Alexander**
 **Wuesthoff & Wuesthoff**
 **Patentanwälte und Rechtsanwalt PartG mbB**
 **Schweigerstraße 2**
 **81541 München (DE)**

(54) **DEVICE AND METHOD FOR CONTROLLING TERMINAL PROCESSING TIME DURING RANDOM ACCESS PROCEDURE IN WIRELESS COMMUNICATION SYSTEM**

(57) The present disclosure relates to controlling a terminal processing time during a random access procedure in a wireless communication system, and a method performed by a terminal may include transmitting a message 1 for a random access procedure, receiving downlink control information (DCI) that schedules a message 2, receiving a physical downlink shared channel (PDSCH) scheduled by the DCI through physical resource blocks (PRBs) allocated by the DCI, based on failure of a physical random access channel (PRACH) procedure being determined based on a situation related to the message 2, transmitting a PRACH no later than a first time length after a last symbol of the PDSCH, and based on the PDSCH including a random access response (RAR) message including a uplink grant that schedules a physical uplink shared channel (PUSCH), transmitting a message 3 through the PUSCH so that a time between the last symbol of the PDSCH and a first symbol of the message 3 is not smaller than a second time length.

**FIG. 11**

## Description

### Technical Field

The present disclosure relates to a wireless communication system, and mor particularly, to an apparatus and a method for controlling terminal processing time during a random access procedure in a wireless communication system.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide an apparatus and a method for smoothly performing a random access procedure in a wireless communication system.

The present disclosure may provide an apparatus and a method for determining processing time of a terminal when performing a random access procedure in a wireless communication system.

The present disclosure may provide an apparatus and a method for determining processing time of a terminal after physical shared control channel (PDSCH) transmission when performing a random access procedure in a wireless communication system.

The present disclosure may provide an apparatus and a method for allocating a resource for transmitting a message 3 when performing a 4-step random access procedure in a wireless communication system.

The present disclosure may provide an apparatus and a method for allocating a resource for transmitting a message 3 based on a size of sub-carrier spacing (SCS) when performing a 4-step random access procedure in a wireless communication system.

The present disclosure may provide an apparatus and a method for determining processing time of a terminal based on a size of SCS after PDSCH transmission when performing a 4-step random access procedure in a wireless communication system.

The present disclosure may provide an apparatus and a method for allocating a resource for transmitting a message 3 based on a size of resource block group (RBG) when performing a 4-step random access procedure in a wireless communication system.

The present disclosure may provide an apparatus and a method for determining processing time of a terminal based on a size of RBG after PDSCH transmission when performing a 4-step random access procedure in a wireless communication system.

The present disclosure may provide an apparatus and a method for determining a time limit for retransmission of a message 1 when an error of a random access procedure occurs in a wireless communication system.

The present disclosure may provide an apparatus and a method for determining a time limit for retransmission of a message 1 based on a size of SCS when an error of a random access procedure occurs in a wireless communication system.

The present disclosure may provide an apparatus and a method for determining a time limit for retransmission of a message 1 based on a size of RBG when an error of a random access procedure occurs in a wireless communication system.

The present disclosure may provide an apparatus and a method for determining a time limit for retransmission of a message 1 based on a type of error when an error of a random access procedure occurs in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

**Technical Solution**

As an example of the present disclosure, a method performed by a terminal in a wireless communication system may include transmitting a message 1 for a random access procedure, receiving downlink control information (DCI) that schedules a message 2, receiving a physical downlink shared channel (PDSCH) scheduled by the DCI through physical resource blocks (PRBs) allocated by the DCI, based on failure of a physical random access channel (PRACH) procedure being determined based on a situation related to the message 2, transmitting a PRACH no later than a first time length after a last symbol of the PDSCH, and based on the PDSCH including a random access response (RAR) message including a uplink grant that schedules a physical uplink shared channel (PUSCH), transmitting a message 3 through the PUSCH so that a time between the last symbol of the PDSCH and a first symbol of the message 3 is not smaller than a second time length. A first number of PRBs allocated by the DCI may be larger than a second number of PRBs corresponding to a max scheduled transmission bandwidth of the terminal.

As an example of the present disclosure, a terminal in a wireless communication system may include a transceiver and a processor coupled with the transceiver, and the processor may be configured to transmit a message 1 for a random access procedure, to receive downlink control information (DCI) that schedules a message 2, to receive a physical downlink shared channel (PDSCH) scheduled by the DCI through physical resource blocks (PRBs) allocated by the DCI, to transmit a PRACH no later than a first time length after a last symbol of the PDSCH, based on failure of a physical random access channel (PRACH) procedure being determined based on a situation related to the message 2, and to transmit a message 3 through a physical uplink shared channel (PUSCH) so that a time between the last symbol of the PDSCH and a first symbol of the message 3 is not smaller than a second time length, based on the PDSCH including a random access response (RAR) message including a uplink grant that schedules the PUSCH, and a first number of PRBs allocated by the DCI may be larger than a second number of PRBs corresponding to a max scheduled transmission bandwidth of the terminal.

As an example of the present disclosure, a communication device may include at least one processor and at least one computer memory coupled with the at least one processor and storing an instruction that instructs operations when executed by the at least one processor, and the operations may include transmitting a message 1 for a random access procedure, receiving downlink control information (DCI) that schedules a message 2, receiving a physical downlink shared channel (PDSCH) scheduled by the DCI through physical resource blocks (PRBs) allocated by the DCI, based on failure of a physical random access channel (PRACH) procedure being determined based on a situation related to the message 2, transmitting a PRACH no later than a first time length after a last symbol of the PDSCH, and based on the PDSCH including a random access response (RAR) message including a uplink grant that schedules a physical uplink shared channel (PUSCH), transmitting a message 3 through the PUSCH so that a time between the last symbol of the PDSCH and a first symbol of the message 3 is not smaller than a second time length. A first number of PRBs allocated by the DCI may be larger than a second number of PRBs corresponding to a max scheduled transmission bandwidth of the terminal.

As an example of the present disclosure, a non-transitory computer-readable medium storing at least one instruction includes the at least one instruction that is executable by a processor, the at least one instruction may instruct a device to transmit a message 1 for a random access procedure, to receive downlink control information (DCI) that schedules a message 2, to receive a physical downlink shared channel (PDSCH) scheduled by the DCI through physical resource blocks (PRBs) allocated by the DCI, to transmit a PRACH no later than a first time length after a last symbol of the PDSCH, based on failure of a physical random access channel (PRACH) procedure being determined based on a situation related to the message 2, and to transmit a message 3 through a physical uplink shared channel (PUSCH) so that a time between the last symbol of the PDSCH and a first symbol of the message 3 is not smaller than a second time length, based on the PDSCH including a random access response (RAR) message including a uplink grant that schedules the PUSCH, and a first number of PRBs allocated by the DCI may be larger than a second number of PRBs corresponding to a max scheduled transmission bandwidth of the terminal.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, a random access procedure may be smoothly performed.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description of Drawings**

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system applicable to the present disclosure.

FIG. 2 illustrates an example of a wireless device applicable to the present disclosure.

FIG. 3 illustrates a frame structure in a wireless communication system applicable to the present disclosure.

FIG. 4 illustrates an example of a resource grid in a wireless communication system applicable to the present disclosure.

FIG. 5 illustrates an example of a physical resource block in a wireless communication system applicable to the present disclosure.

FIG. 6 illustrates an example of a slot structure in a wireless communication system applicable to the present disclosure.

FIG. 7 illustrates examples of physical channels and an example of a general signal transmission and reception method using the physical channels used in a wireless communication system, applicable to the present disclosure.

FIG. 8A and FIG. 8B illustrate an example of a procedure of 4-step PRACH that is applicable to the present disclosure.

FIG. 9 illustrates an example of a structure of a message 2 that is applicable to the present disclosure.

FIG. 10 illustrates an example of a structure of an uplink grant field in a message 2 that is applicable to the present disclosure.

FIG. 11 illustrates an example of a procedure of transmitting feedback information on a message 2 based on an additional marginal time according to an embodiment of the present disclosure.

FIG. 12 illustrates an example of a procedure of transmitting feedback information on a message 2 based on a feedback time indicator according to an embodiment of the present disclosure

FIG. 13 illustrates an example of a procedure of retransmitting a signal including a preamble according to an embodiment of the present disclosure.

**Mode for Invention**

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

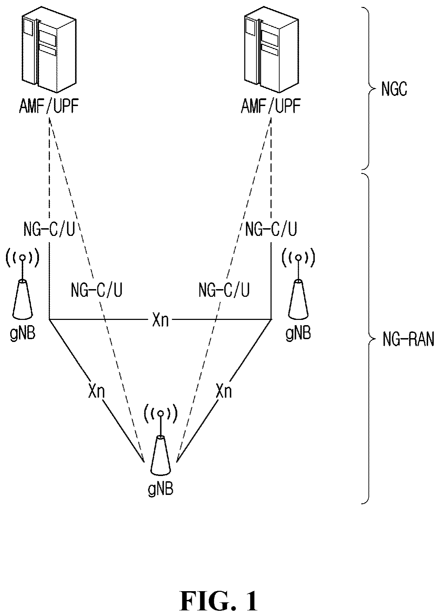

FIG. 1 exemplifies a structure of a wireless communication system applicable to the present disclosure. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

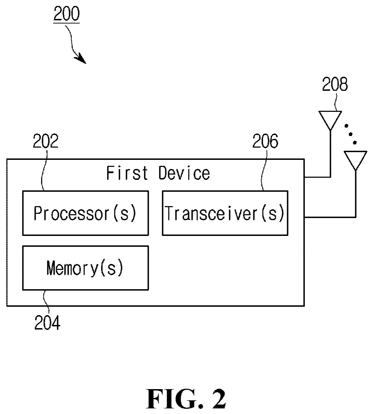

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information related to an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs related to sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

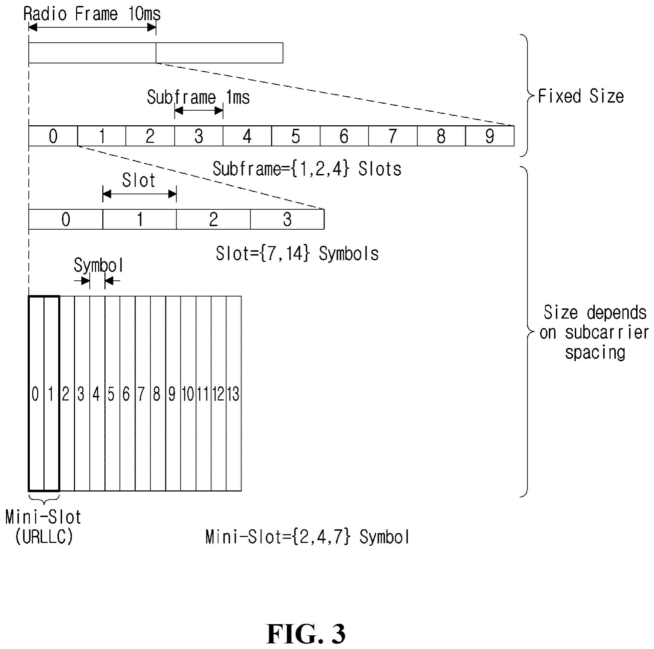

FIG. 3 exemplifies a frame structure in a wireless communication system applicable to the present disclosure.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/\Delta f_{max} \cdot N_f$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \left\{ 0, \cdots, N_{slot}^{subframe,\mu} - 1 \right\}$ in a subframe and are numbered in an increasing order of $n_{s,f}^\mu \in \left\{ 0, \cdots, N_{slot}^{frame,\mu} - 1 \right\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

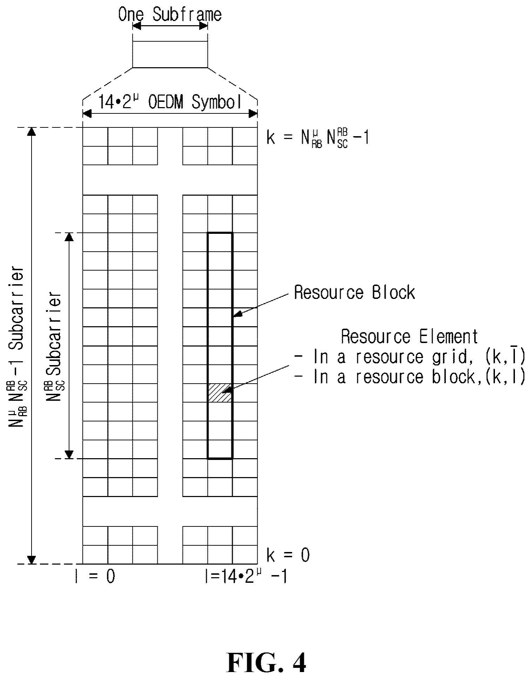

FIG. 4 exemplifies a resource grid in a wireless communication system applicable to the present disclosure.

Referring to FIG. 4, as an illustrative description, a resource grid is configured with $N_{RB}^\mu N_{SC}^{RB}$ subcarriers in a frequency domain, and one subframe is configured with $14 \cdot 2^\mu$ OFDM symbols, but the resource grid and the subframe are not limited thereto. In an NR system, a transmitted signal is described by one or more resource grids configured with

$2^\mu N_{symb}^{(\mu)}$ OFDM symbols and $N_{RB}^\mu N_{SC}^{RB}$ subcarriers. Here, $N_{RB}^\mu \leq N_{RB}^{\max,u}$. The $N_{RB}^{\max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k=0,\ldots,N_{RB}^\mu N_{SC}^{RB}-1$ is an index in a frequency domain and l'=0, ... , $2^\mu N_{symb}^{(\mu)}-1$ refers to a position of a symbol in a subframe. When referring to a resource element in a slot, an index pair (k, l) is used. Here, $l=0,\ldots,2^\mu N_{symb}^{(\mu)}-1$. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^\mu$ and a resource element (k, l) for a subcarrier spacing configuration $\mu$ in a frequency domain is given as in the following Equation 1.

[Equation 1]

$$n_{CRB}^\mu = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu}-1$ 1] in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^\mu = n_{PRB}^\mu + N_{BWP,i}^{start,\mu}$$

$N_{BWP,i}^{start,\mu}$ is a common resource block that a BWP starts relatively to common resource block 0.

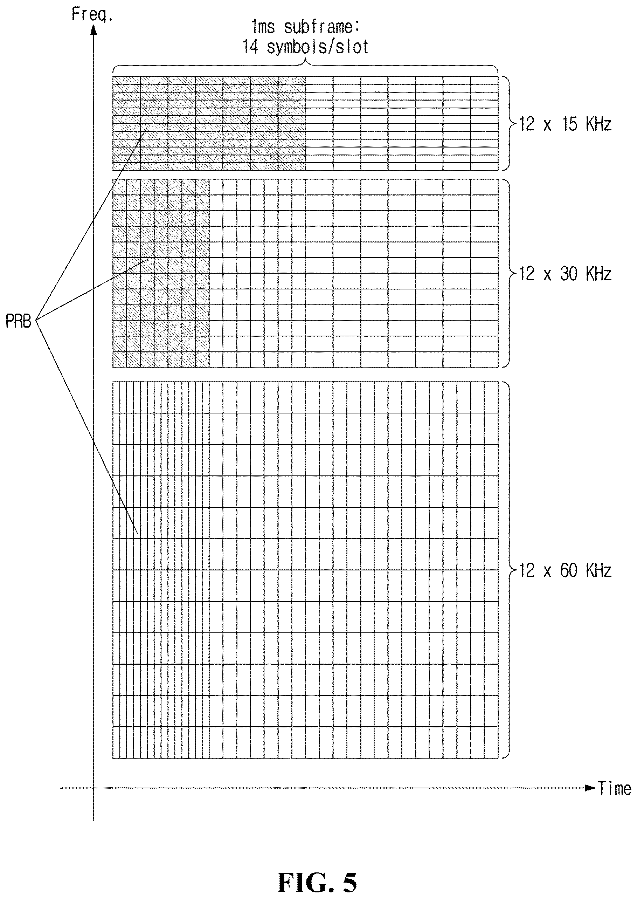

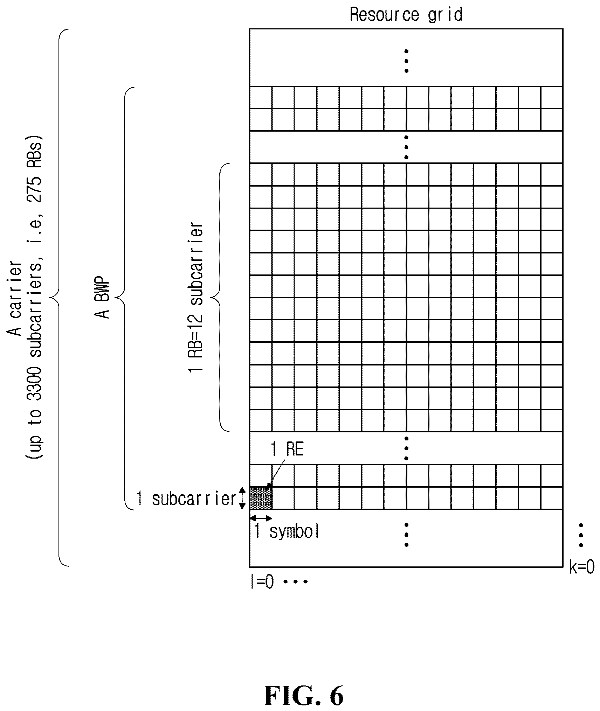

FIG. 5 exemplifies a physical resource block in a wireless communication system applicable to the present disclosure. In addition, FIG. 6 exemplifies a slot structure in a wireless communication system applicable to the present disclosure.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.).

A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

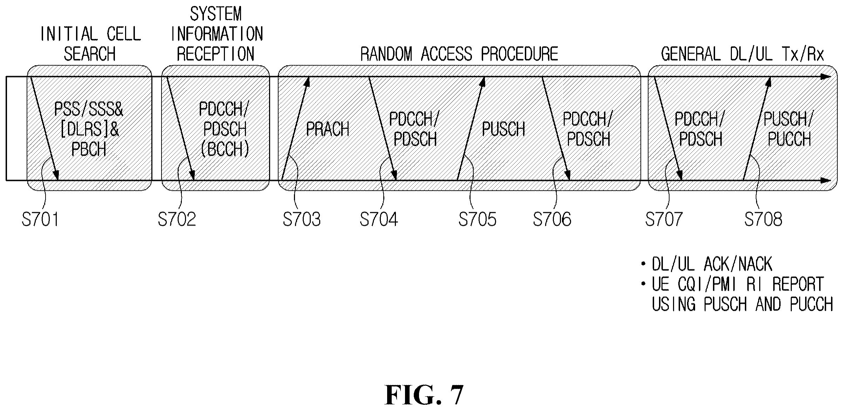

FIG. 7 exemplifies physical channels and a general signal transmission and reception method using the physical channels used in a wireless communication system, applicable to the present disclosure.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Concrete Embodiments of the Present Disclosure

Hereinafter, the present disclosure relates to a random access procedure and to a technology for handling a case where a frequency resource exceeding a max scheduled transmission bandwidth is allocated to a terminal using a limited bandwidth. Particularly, the present disclosure provides various embodiments of determining a time duration for operation for a channel with a larger bandwidth than a max allowed bandwidth.

5G NR is a technology of providing a service based on three main technologies of Enhanced Mobile Broadband (eMBB), URLLC, and massive Internet of Thing (mIoT). mIoT may be considered a terminal device form with optimized power consumption based on a small size and low power rather than carrier aggregation (CA) that is technically directed to requiring a maximum throughput (max T-put) rate transmission with high performance. In 5G NR, apart from URLLC, eMBB and mIoT, there may be a hybrid type of those three technologies. In 3GPP Release-17, when a smart factory or a wearable device is a target, a new device type requiring low power and URLLC or a certain level of speed may be needed. This type of device is referred to as a reduced performance terminal, that is, a reduced capability (Redcap) UE or a Redcap terminal.

As for frequency resource, unlike the existing device, a Redcap UE uses a narrow spectrum or bandwidth (BW). Specifically, a Redcap UE uses a maximum of 20 MHz or 5 MHz BW, instead of 100 MHz BW, and this case may reduce power consumption and save cost. That is, for a Redcap terminal using a 20 MHz BW of the 3GPP Release 17, in order to save some memory cost, it is possible to consider a technology for controlling use of a partial number of PRBs corresponding to a BWP size for a channel of PxSCH according to a situation and for applying relaxation to terminal processing time accordingly. The present disclosure proposes a technology that follows a modified decoding-related design by introducing an operation, which lowers partial performance, and thus has an advantage in effectively operating devices of a similar type to RedCap, apart from saving memory cost.

The present disclosure relates to a terminal using a narrow bandwidth, and for a BW of an overall channel, instead of the max 100 MHz BWP used by typical devices, the number of PRBs (e.g., the number of PRBs continuously or discontinuously placed within a max 20 MHz BWP) corresponding to a 5 MHz BW may be used as the number of PRBs of unicast PxSCH in a RedCap terminal using the max 20 MHz BWP. Herein, operation of a PDSCH within the number of PRBs corresponding to a max BWP size within a BWP has no big issue. However, in the case of a channel that delivering SIBI or PDCCH, a problem may occur.

For example, in case an existing terminal, a Release-17 Redcap terminal, and a Release-18 eRedcap terminal exist in a single base station together, it may be desirable that the base station operates common channels without distinction and, only for operation of dedicated channels, provides a service to various types of terminals within coverage in a single cell by considering terminals according to each release. However, in the case of a physical random access channel (PRACH) procedure, some terminals in a message 2 may be distinguished to a certain degree by a PRACH preamble ID that is not a RNTI level though. Accordingly, in the case of a Release-18 eRedcap terminal that requires further performance relaxation as compared to a Release-17 Redcap terminal, if the number of allocated PRBs exceeds a 5MHz BW, data processing may require more time with high probability, and accordingly it may be desirable that a more temporal margin is given until following channels. That is, in case, unlike a channel that is commonly operated, an allocation limit is given to the number of PRBs corresponding to the 5 MHz BW for a dedicated channel, a situation may occur in which the number of PRBs allocated to a message 2 for a 4-step RACH procedure exceeds the number of PRBs corresponding to the 5 MHz BW. In this case, general terminals may decode the message 2 without problem, but the Release-18 eRedcap terminal may have difficulty with decoding or require a high degree of complexity. Accordingly, instead of simplicity and cost reduction in model development, an efficient method for a Redcap or eRedcap terminal may be considered. Of course, the proposed technology of the present disclosure may be applied to other procedures likewise and be utilized as an improvement suitable for a situation. The present disclosure will mainly describe a message 2 that is transmitted through a frequency resource exceeding a max scheduled transmission BW (e.g., 5 MHz). Herein, PRBs of a 5 MHz BW may be placed contiguously or noncontiguously.

PRACH procedures are divided into contention based random access (CBRA) and contention free random access (CFRA) according to whether there is contention or not and may be divided into 4-step PRACH and 2-step PRACH introduced in Release-16 according to the number of steps. The present disclosure proposes a technology of relaxing a processing time of a terminal with a limit of a max scheduled transmission BW (e.g., 5 MHz) for unicast in the case of a PDSCH delivering a message 2 of 4-step PRACH. Specifically, the present disclosure proposes a technology of applying processing time relaxation for a case where the number of PRBs exceeding a 5 MHz BW is allocated.

A terminal considered in the present disclosure such as a RedCap or eRedCap terminal uses a limited BW. Accordingly, a channel with a BW exceeding the limited BW may not be processed within a single slot. However, even when the channel with the BW exceeding the limited BW is received, if a sufficient processing time is provided, a terminal may process the channel. Specifically, a limited BW, that is, a max scheduled transmission BW is a limit that may be processed within a single slot, and if a plurality of slots are provided as a processing time, a terminal may buffer data about a corresponding channel and then process the data during the given processing time. For example, in order to process a channel with a BW exceeding a limited BW, a time at least twice as long as a required time for processing a channel below the limited BW (e.g., at least two slots) may be required as a processing time.

Meanwhile, in the case of a PDSCH for SIB, unlike the PRACH procedure, the processing time relaxation may not be applied. It is because information included in the PDSCH for SIB is not user-specific information requiring quick decoding as compared with information related to a random access procedure. In the case of a PRACH, information included in a message 2 may not be user-specific information. However, for quick access, as a limit on the number of PRBs according to a BW as in unicast PxSCH is not desirable, minimum relaxation on a processing time of a terminal is required for a PRACH procedure.

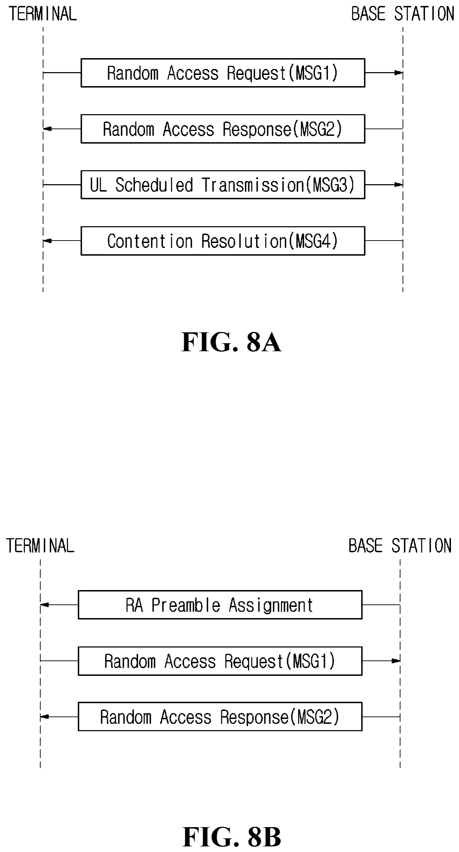

FIG. 8A and FIG. 8B illustrate an example of a procedure of 4-step PRACH that is applicable to the present disclosure. FIG. 8A exemplifies a CBRA scheme, and FIG. 8B exemplifies a CFRA scheme. Referring to FIG. 8A, a terminal and a base station perform a random access procedure by transmitting and/or receiving a message 1, a message 2, a message 3, and a message 4. Referring to FIG. 8B, a terminal and a base station perform a random access procedure by transmitting and/or receiving a message 1 and a message 2 after random preamble allocation.

[Table 5]

| |
|---|
| 8.3 PUSCH scheduled by RAR UL grant<br><br>...<br><br>With reference to slots for a PUSCH transmission scheduled by a RAR UL grant, if a UE receives a PDSCH with a RAR message ending in slot n for a corresponding PRACH transmission from the UE, the UE transmits the PUSCH in slot $n + k_2 + \Delta$, where $k_2$ and $\Delta$ are provided in [6, TS 38.214].<br>The UE may assume a minimum time between the last symbol of a PDSCH reception conveying a RAR message with a RAR UL grant and the first symbol of a corresponding PUSCH transmission scheduled by the RAR UL grant is equal to $N_{T,1} + N_{T,2} + 0.5$ msec, where $N_{T,1}$ is a time duration of $N_1$ symbols corresponding to a PDSCH processing time for UE processing capability 1 when additional PDSCH DM-RS is configured, $N_{T,2}$ is a time duration of $N_2$ symbols corresponding to a PUSCH preparation time for UE processing capability 1 [6, TS 38.214] and, for determining the minimum time, the UE considers that $N_1$ and $N_2$ correspond to the smaller of the SCS configurations for the PDSCH and the PUSCH. For $\mu = 0$, the UE assumes $N_{1,0} = 14$ [6, TS 38.214]. |

Table 5 shows a description about a terminal processing time until transmission of a message 3 after RA-RNTI based DCI for message 2 is transmitted in a 4-step PRACH procedure. Specifically, it is certain that $N_{T,1} + N_{T,2} + 0.5$ msec is needed, and it is defined accordingly that a time of message 3 transmission should be appropriately scheduled using a K2 value (e.g., TDRA field) in a uplink grant of a message 2 RAR. Herein, the present disclosure applies an additional marginal time X to propose that $N_{T,1} + N_{T,2} + 0.5 + X$ msec is needed, and the additional marginal time X may be applied only when the number of scheduled PRBs exceeds the number of PRBs corresponding to a max scheduled transmission BW (e.g., 5 MHz) of a PDSCH that is scheduled by a PDCCH using a RA-RNTI. In addition, if X is applied, some improvements of operation may be needed. For example, in case a message 3 is transmitted after the message 2, the message 3 should be transmitted after a time lapse containing X, and the K2 value needs to be suitably indicated to correspond to n+K2+△ so that a terminal secures a sufficient time to transmit the message 3. Otherwise, a Release-18 eRedcap terminal may not complete decoding of the PDSCH for the message 2 at a time when the message 3 should be transmitted, and normal message 3 transmission may result in failure.

The K2 value may be delivered as follows. The message 3 is not scheduled through the PDCCH but is scheduled by uplink grant information of the message 2 RAR. This may be understood as a structure where some information (e.g., information on some fields of PUSCH) in relatively simplified DCI is transmitted not through the PDCCH but through multiple PDUs according to a random access preamble ID (RAPID) in a MAC CE.

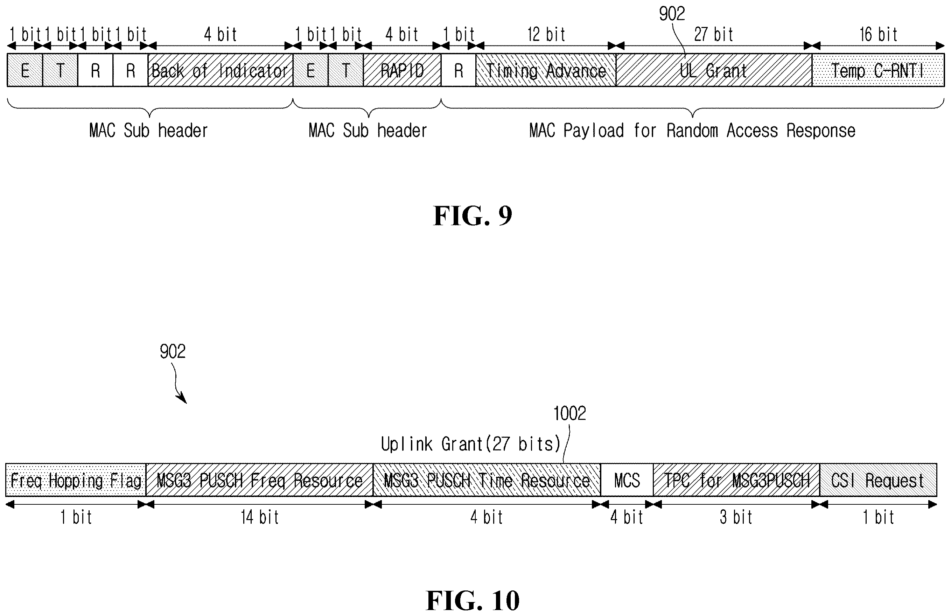

FIG. 9 illustrates an example of a structure of a message 2 that is applicable to the present disclosure. Referring to FIG. 9, an overall MAC CE structure of the message 2, that is, a RAR is shown. Among various fields, an uplink grant field 902 includes information for transmitting a message 3. Because a payload size is determined beforehand, an additional bit is not easy to insert. If a base station wants to add further information to the uplink grant field 902, it may be required to reduce the length of any other field.

FIG. 10 illustrates an example of a structure of an uplink grant field in a message 2 that is applicable to the present disclosure. Referring to FIG. 10, the uplink grant field 902 has a size of 27 bits. A TDRA field 1002, which indicates a time resource of a PUSCH for a message 3, is included. The TDRA field 1002 is used to designate one of 16 rows included in a default TDRA table, which is indicated in a SIB1, as shown in Table 6 below.

[Table 6]

| Row index | PUSCH mapping type | $K_2$ | S | L |
|---|---|---|---|---|
| 1 | Type A | $j$ | 0 | 14 |
| 2 | Type A | $j$ | 0 | 12 |
| 3 | Type A | $j$ | 0 | 10 |
| 4 | Type B | $j$ | 2 | 10 |
| 5 | Type B | $j$ | 4 | 10 |
| 6 | Type B | $j$ | 4 | 8 |
| 7 | Type B | $j$ | 4 | 6 |
| 8 | Type A | $j+1$ | 0 | 14 |
| 9 | Type A | $j+1$ | 0 | 12 |
| 10 | Type A | $j+1$ | 0 | 10 |
| 11 | Type A | $j+2$ | 0 | 14 |
| 12 | Type A | $j+2$ | 0 | 12 |
| 13 | Type A | $j+2$ | 0 | 10 |
| 14 | Type B | $j$ | 8 | 6 |
| 15 | Type A | $j+3$ | 0 | 14 |
| 16 | Type A | $j+3$ | 0 | 10 |

Hereinafter, the present disclosure describes various embodiments regarding how to operate an additional marginal time X, how a base station delivers timing indication to a terminal in a situation of applying the additional marginal time X, and the like.

Embodiment #1: a scheme of terminal processing time relaxation based on a BWP size according to transmission of a message 2

There may be various schemes regarding how many additional margins will be given after DCI transmission for the message 2. For example, X is a single value, two cases are defined, that is, the one where the number of PRBs corresponding to 5 MHz, which is a max BW of 20 MHz, is greater than or equal to the number of scheduled PRBs, and the other where the number of scheduled PRBs is greater than the number of PRBs corresponding to 5 MHz, and X may be selectively applied to the two cases. Alternatively, four cases may be defined according to the number of scheduled PRBs with a minimum unit being the number of PRBs corresponding to 5 MHz BW, and values of X corresponding to the four cases may be defined in various ways. According to an embodiment, X may be defined as shown in Equation 3 below.

$$X = F \text{ (Floor (number of allocated PRBs)/(number of PRBs corresponding to 5 MHz BW)), SCS)} \qquad \text{[Equation 3]}$$

As shown in Equation 3, input variables of the function for X may include two values of Ceil {(number of allocated PRBs) / (number of PRBs corresponding to 5 MHz BW)} and SCS.

Furthermore, as for SCS, a time relationship in a multiple form may be considered between 15 KHz and 30 KHz. For example, it is possible to consider a relationship like (A1 for 15KHz SCS) = (A2 for 30KHz SCS) $\times$ 2. If SCS is not considered, A1 is 0 in Equation 3 above. In addition, according to the number of PRBs corresponding to a max scheduled transmission BW (e.g., 5 MHz), it is possible to define the value of X to be proportional to another value (e.g., P).

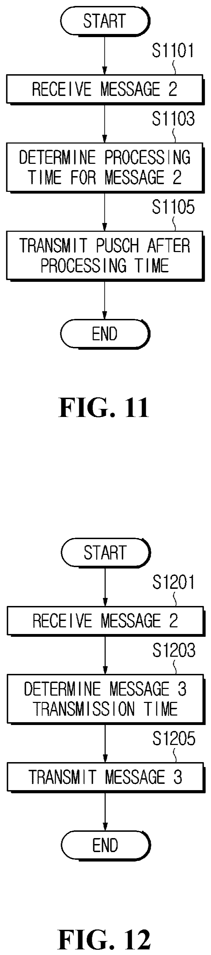

FIG. 11 illustrates an example of a procedure of transmitting feedback information on a message 2 based on an additional marginal time according to an embodiment of the present disclosure. FIG. 11 exemplifies a method performed by a terminal.

FIG. 11 illustrates an example of a procedure of transmitting a message 3 based on an additional marginal time according to an embodiment of the present disclosure. FIG. 11 exemplifies a method performed by a terminal.

Referring to FIG. 11, at step S1101, the terminal receives the message 2. To this end, the terminal may detect DCI for a PDSCH delivering the message 2 and receive the message B through the PDSCH indicated by the DCI. Herein, the DCI may be detected using a RA-RNTI. Next, the terminal may decode the message 2 and identify information in the message 2. Herein, according to an embodiment, the terminal may identify at least a part of information for determining a processing time later from the DCI that schedules the message 2. For example, the information for determining the processing time may include at least one of SCS of a corresponding BWP, the number of RBs allocated for the PDSCH, and the number of RBs corresponding to a max BW allowed for the terminal.

At step S1103, the terminal determines the processing time for the message 2. For example, the processing time may be specified as a time spacing value that starts from a transmission time of a last OFDM symbol of the PDSCH of the message 2. To this end, the terminal may determine the processing time based on the information identified at step S1101 and preconfigured information. For example, the terminal may determine an additional marginal time based on at least one of SCS of a BWP, the number of RBs allocated for the PDSCH, the number of RBs corresponding to a max BW allowed for the terminal, a marginal time determination function, and a marginal time mapping table, and determine the processing time based on the additional marginal time and a default marginal time. For example, the larger the number of allocated RBs, the additional marginal time may be determined to be longer.

At step S1105, the terminal transmits PUSCH after the processing time. That is, when the processing time determined at step S1103 has elapsed, the terminal transmits PUSCH scheduled by the message 2 to the base station. That is, the terminal may process (e.g., decode, check error, etc.) the message 2 by using a time duration from the last symbol of the PDSCH delivering the message 2 to the transmission time of PUSCH as the processing time and transmit PUSCH.

As described with reference to FIG. 11, a terminal may determine a processing time for a message 2 based on an additional marginal time, process the message 2 during the determined processing time, and then transmit PUSCH. Hereinafter, the present disclosure will describe further detailed embodiments for determining an additional marginal time X.

Embodiment #1-1: in case PRBs exceeding the number of PRBs corresponding to a max scheduled transmission BW(P) (e.g., 5 MHz) (hereinafter 'max PRB number') are allocated for a message 2 PDSCH, an additional margin is applied by X. Otherwise, that is, in case PRBs not exceeding the max PRB number are allocated for the massage 2, X is 0.

Embodiment #1-2: the value of X may be determined based on a relationship between the number of allocated PRBs and the number of PRBs corresponding to a max scheduled transmission BW(P) (e.g., 5 MHz). For example, if the number of PRBs corresponding to a BW(P) of 5 MHz is 25 with 15 KHz SCS, a section of a plurality of allocated PRBs (e.g., 25, 50, 75, 100, etc.) may be defined in a unit of 25, and a plurality of X values may be defined to correspond to sections. For example, a set of selectable X values may consist of four values including 0. In addition, the value of X may be determined in a multiple form of a specific value of K and be determined differently, for example, every 25 PRBs (e.g., X = Floor {(number of PRBs allocated for message 2) / 25}×K)

Embodiment #1-3: in the above-described Embodiment #1-2, SCS may further be considered. In case the value of X is determined based on SCS, a value of X corresponding to 15 KHz and a value of X corresponding to 30 KHz may have a 2 or 1/2 times relationship. Alternatively, the value of X corresponding to 15 KHz and the value of X corresponding to 30 KHz may be defined as two different values, not the 2 or 1/2 times relationship. For example, a delay value corresponding to the number of allocated PRBs and a delay value derived from SCS may be in a product relationship (e.g., X = (delay value corresponding to number of allocated PRBs) x (delay value of SCS)). As another example, the delay value corresponding to the number of allocated PRBs and the delay value derived from SCS may be in an addition relationship (e.g., X = (delay value corresponding to number of allocated PRBs) x (delay value of SCS)).

Embodiment #2: a timing control scheme for transmission of a message 3 in terminal processing time relaxation

In Embodiment #1, when a sufficiently additional marginal time X is added to a terminal processing time, a K2 value, which is included in signaling for timing of transmitting a message 3, should be suitably set. In other words, a base station may need to suitably notify the K2 value. Herein, K2 is a PUSCH scheduling-related parameter set by RRC signaling and means a minimum offset between a slot delivering an uplink grant scheduling the PUSCH and a slot delivering the PUSCH.

FIG. 12 illustrates an example of a procedure of transmitting feedback information on a message 2 based on a feedback time indicator according to an embodiment of the present disclosure. FIG. 12 exemplifies a method performed by a terminal.

Referring to FIG. 12, at step S1201, the terminal receives a message 2. To this end, the terminal may detect DCI for a PDSCH delivering the message 2 and receive the message 2 through the PDSCH indicated by the DCI. Herein, the DCI may be detected using a RA-RNTI. In addition, the terminal may decode the message 2 and identify information in the message 2. Herein, the terminal may identify at least a portion of information for determining a transmission time of a message 3. For example, the information for determining the transmission time of the message 3 may include at least one of the number of RBs corresponding to a max scheduled transmission BW, the number of RBs allocated for the message 2, a slot where the PDSCH delivering the message 2 is received, and an SCS.

At step S1203, the terminal determines the transmission time of the message 3. For example, the transmission time of the message 3 may be specified as a time spacing value that starts from a transmission time of a last OFDM symbol of the PDSCH of the message 2. In other words, the terminal identifies a slot including a PUSCH for the message 3. To this end, the terminal may determine the transmission time of the message 3 based on the information identified at step S1201 and preconfigured information (e.g. a PUSCH scheduling-related parameter K2 set by RRC signaling). For example, the terminal may determine an additional marginal time based on at least one of the number of RBs allocated for the PDSCH, the number of RBs corresponding to a max BW allowed for the terminal, an SCS of the PUSCH delivering the message 3, and a marginal time mapping table, and determine the transmission time of the message 3 based on the additional marginal time and a default marginal time. For example, the terminal may determine the transmission time of the message 3 based on a first offset (e.g., K2) set by high layer signaling, a second offset (e.g., △) corresponding to the SCS of the PUSCH, and a third offset according to a BW of the PUSCH exceeding the max scheduled transmission BW.

At step S1205, the terminal transmits the message 3. The terminal transmits the message 3 to a base station according to the transmission time of the message 3 that is determined at step S1203. For example, the terminal may determine a slot for message 3 transmission based on at least one of the slot where the PDSCH delivering the message 2 is received, and the SCS and transmit the message 3 by using a PUCCH in the determined slot. That is, the terminal may process (e.g., decode, check error, etc.) the message 2 before the message 3 transmission time arrives and transmit the message 3.

As described with reference to FIG. 12, a terminal may determine a message 3 transmission time based on predefined or preconfigured information and information related to a message 2 and transmit the message 3. Hereinafter, the present disclosure will describe further detailed embodiments related to an offset applied to K2 that is used to determine a slot including a PUSCH delivering the message 3.

According to various embodiments, a slot offset may be applied to a K2 value. Alternatively, a symbol offset may be applied to S of Table 6 above. In the description below, an offset is described to be applied to a slot, but an offset for S may be separately predefined or added using DCI or using high layer signaling.

[Table 7]

| $\mu_{PUSCH}$ | j |
| --- | --- |
| 0 | 1 |
| 1 | 1 |
| 2 | 2 |
| 3 | 3 |

[Table 8]

| $\mu_{PUSCH}$ | △ |
| --- | --- |
| 0 | 2 |
| 1 | 3 |
| 2 | 4 |
| 3 | 6 |

As shown in Table 7 and Table 8, because a 3GPP Release-18 eRedcap terminal considers only SCS 15 KHz and 30 KHz in relation to K2, j is 1.

As the present disclosure considers a change of K2, in case an additional marginal time X is applied, embodiments regarding how to indicate K adequately will be described. The embodiments described below may be reflected when early indication of a message 1 is configured for eRedCap. In case no early indication of the message 1 is configured, an existing table may be reused or a slot offset may not be applied. Herein, if the slot offset is applied, a slot offset value may be different according to SCS.

Embodiment 2-1: a new default TDRA table may be defined, and the new default TDRA table may be applied only to a Release-18 eRedcap UE. Herein, for the default TDRA table, regarding whether or not an existing table is applied, a base station may indicate using a remaining bit of FDRA or a CSI request without allocating an additional bit among fields in an uplink grant included in a message 2. In addition, instead of a default TDRA, a TDRA table used in pusch-Time-DomainAllocationList configured in a high layer and included in one of pusch-ConfigCommon and pusch-Config through an SIB may be applied.

Embodiment #2-2: an offset value is applied to an existing K2 value. Herein, the offset value may be predefined. In addition, an offset may be defined as a single value or a plurality of values. Herein, as various X values may be defined in Embodiment #1, various offset values may also be defined according to the number of PRBs allocated for a message 2 or an SCS.

Furthermore, indexes for an offset value may be set through an SIB1, and a specific index may be indicated using a bit not used in an uplink grant (e.g., a remaining bit of an FDRA field or a CSI request field). Alternatively, a field indicating a specific index may be added to DCI of RA-RNTI.

Alternatively, a new parameter (e.g., 0) may be defined in n + k2 + △ that is not an offset of K2. The parameter 0 may be set by an SIB or be predefined. This method may be understood to be similar to the above-described embodiments where an offset is additionally given to K2. In this case, the value of 0 may be different according to SCS.

Embodiment #2-3: in a current default TDRA table, among cases where K2 is designated only by a j value without application of an additional slot offset (e.g., Row indexes 1 to 7 and 14 in Table 6), an offset value may be applied to a PUSCH mapping type B (e.g., Row indexes 4 to 7 and 14 in Table 6). Herein, an offset value may be predefined. In addition, an offset may be defined as a single value or a plurality of values. Herein, as various X values may be defined in Embodiment #1, various offset values may also be defined according to the number of PRBs allocated for a message 2 or an SCS.

In case a base station recognizes a Release-18 eRedcap terminal through early indication of a message 1, because the base station may know the number of (P)RBs allocated for a PDSCH of a message 2 beforehand and a K2 value may be designated up to j+3 as shown in Table 16, the application of an offset may be deemed to be unnecessary. However, a K2 value equal to or greater than j+3 is allowed only for a PUSCH mapping type A. Accordingly, an operation of adding delay using an offset may be more advantageous when an index of a PDSCH mapping type B is designated.

An index of each of offset values may be set using an SIB1, and an index may be indicated using unused bits of an uplink grant (e.g., a remaining bit(s) of an FDRA field or a CSI request field). Alternatively, DCI of RA-RNTI may include a field that indicates an index. In this case, a slot offset value corresponding to a corresponding bit (e.g., index) may be different according to SCS.

Embodiment #2-4: DCI of RA-RNTI may include an SLIV value that is applicable to a Release-18 eRedcap terminal. The SLIV value may be applied when the number of PRBs corresponding to a max scheduled transmission BW (e.g., 5 MHz) is exceeded.

- Embodiment #2-5: in addition to or instead of an offset for K2, the value of △ may be adjusted. For example, an offset for △ may be applied, or a △ value table like Table 8 may be updated, or a new table may be defined.
- Embodiment #2-6: an offset may be applied for a limited case. For example, for 15 KHz SCS or 30 KHz SCS, one slot or two slots may be defined to be added. That is, as an offset value, according to SCS, one slot or two slots may be used. Herein, the number of added slots may be different according to SCS.

For example, in case a processing time of a terminal is $N_{T,1} + N_{T,2} + 0.5 + X$ msec, the value of X may be defined in a minimum unit of 2 msec for 15 KHz SCS. In this case, if a margin of transmission time of a message 3 PUSCH is considered for a default TDRA table, values of some rows may be unavailable. When some rows are unavailable, it is the case of 15 KHz SCS or 30 KHz SCS. Accordingly, for this case, delay of the message 3 PUSCH transmission may be applied as one slot.

For example, in the TDRA table of Table 6, a slot offset may be applied for some values. For example, a slot offset may be applied only to j or j+1 in K2.

Embodiment #2-7: in a RAR of a MAC CE (e.g., a RAR including fallbackRAR), an offset of one slot may be indicated using 1 bit of MSB or LSB of FDRA. An offset value may be determined as one slot, and the offset value may be preset in a RRC. If the number of PRBs allocated to a message 2 is smaller than the number of PRBs corresponding to a max scheduled transmission BW (e.g., 5 MHz), an offset and a new default TDRA table may not be applied.

Embodiment #3: a timing control scheme for retransmission of a message 1 after a PRACH procedure is determined as failure at message 2 step

As described above, the present disclosure explained embodiments for improving message 3 transmission according to reception of a message 2. Embodiment #3 relates not to transmission of the message 3 but to a case of PRACH failure occurring in the message 2, and a message 1 is retransmitted in this case. Herein, relaxation of a terminal processing time according to the above-described embodiments may be applied. Table 9 below is a description about retransmission of a message A, which is extracted from the TS 38.213 document.

[Table 9]

| 8.2 Random access response - Type-1 random access procedure<br>... |
| --- |

(continued)

> If the UE does not detect the DCI format 1_0 with CRC scrambled by the corresponding RA-RNTI within the window, or if the UE detects the DCI format 1_0 with CRC scrambled by the corresponding RA-RNTI within the window and LSBs of a SFN field in the DCI format 1_0, if included and applicable, are not same as corresponding LSBs of the SFN where the UE transmitted PRACH, or if the UE does not correctly receive the transport block in the corresponding PDSCH within the window, or if the higher layers do not identify the RAPID associated with the PRACH transmission from the UE, the higher layers can indicate to the physical layer to transmit a PRACH. If requested by higher layers, the UE is expected to transmit a PRACH no later than $N_{T,1}$ +0.75 msec after the last symbol of the window, or the last symbol of the PDSCH reception, where $N_{T,1}$ is a time duration of $N_1$ symbols corresponding to a PDSCH processing time for UE processing capability 1 assuming $\mu$ corresponds to the smallest SCS configuration among the SCS configurations for the PDCCH carrying the DCI format 1_0, the corresponding PDSCH when additional PDSCH DM-RS is configured, and the corresponding PRACH. For $\mu = 0$ , the UE assumes $N_{1,0}$ = 14 [6, TS 38.214]. For a PRACH transmission using 1.25 kHz or 5 kHz SCS, the UE determines $N_1$ assuming SCS configuration $\mu$=0.

Here, according to various embodiments, a Z value may further added to $N_{T,1}$ + 0.75 msec. Here, because Z is applied to a different situation from X defined in the above embodiments, X Z and X may be treated as different values from each other, or X may be equal to Z. Z is not always applied in the situation described by Table 9 but may be applied, according to an embodiment, to a case where a response of a message 2 is not received while more (P)RBs than the number of (P)RBs corresponding to a 5 MHz BW are scheduled in a PDSCH of the message 2. For example, this corresponds to a case where information on a PDSCH through a RA-RNTI has no information on a corresponding terminal or to a situation where CRC check failure occurs. Detailed embodiments for determining X in Embodiment #1 may be performed in the same way or in a similar way in order to determine Z. That is, Z values may be defined for two situations where an equal or smaller number of PRBs are allocated as compared with the number of PRBs corresponding to a max scheduled transmission BW (e.g., 5 MHz) (hereinafter 'max PRB number') and PRBs exceeding the max PRB number are allocated, respectively. Alternatively, values of SCS or BW may be divided into 3 or more sections, and 3 or more Z values may be defined for the sections.

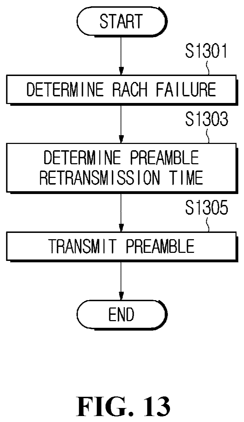

FIG. 13 illustrates an example of a procedure of retransmitting a signal including a preamble according to an embodiment of the present disclosure. FIG. 13 exemplifies a method performed by a terminal.

Referring to FIG. 13, at step S1301, the terminal determines RACH failure. For example, after the terminal transmits a message 1, if the terminal fails to detect DCI for a PDSCH delivering a message 2 within a corresponding window, if the terminal detects the DCI but fails in CRC check, if the terminal fails to receive a corresponding TB properly, or if the message 2 is received without including a RAPID of the terminal, the terminal determines RACH failure. Accordingly, the terminal may determine retransmission of a message 1 or a message 1 including a preamble.

At step S1303, the terminal determines a retransmission time of the preamble. In case the terminal fails to receive the message 2, the terminal identifies information for determining a retransmission time of a message including the preamble. Herein, the terminal may determine the retransmission time based on an additional marginal time that is determined based on a max scheduled transmission BW for the terminal. For example, the additional marginal time may be determined based on at least one of the number of RBs allocated for the message B, a type of RACH failure, and SCS.

At step S1305, the terminal transmits the preamble. That is, the terminal may transmit the message 1 including the preamble after the time that is determined at step S1303.

As described with reference to FIG. 13, a terminal may determine a retransmission time of a preamble based on an additional marginal time and transmit the preamble. Hereinafter, the present disclosure will describe further detailed embodiments for determining an additional marginal time Z.

Embodiment #3-1: in case PRBs exceeding the number of PRBs corresponding to a max scheduled transmission BW (e.g., 5 MHz) (hereinafter 'max PRB number') are allocated for a message 2 PDSCH, an additional marginal time Z may be applied. Otherwise, that is, in case PRBs not exceeding the max PRB number are allocated for the message 2, Z is equal to 0.

Embodiment #3-2: a value of Z may be determined based on a relationship between the number of allocated PRBs and the number of PRBs corresponding to a max scheduled transmission BW(P) (e.g., 5 MHz). For example, if the number of PRBs corresponding to a BW(P) of 5 MHz is 25 with 15 KHz SCS, a section of a plurality of allocated PRBs (e.g., 25, 50, 75, 100, etc.) may be defined in a unit of 25, and a plurality of Z values may be defined to correspond to sections. For example, a set of selectable Z values may consist of four values including 0.

-     Embodiment #3-3: as a cause of RACH failure, in case a preamble ID transmitted from a terminal is not identified in a RAPID field and PDSCH decoding fails, the value of Z may be selectively applied. For example, only in case its preamble ID is not present in the RAPID field, the value of Z may be applied, and in case PDSCH is not correctly decoded, the value of Z may not be applied. As another example, different values of Z may be applied for the two cases. Herein, when its preamble ID is not included in the RAPID field, the same Z value as applied to a message 2 may be applied. In other words, the values of Z for the two cases may be different from each other.

Embodiment #4: various other proposals

Embodiments for determining a value of X or Z may also be applied to a case where the number of scheduled PRBs is greater than the number of PRBs corresponding to a BW of a specific frequency band. If the number of PRBs in the specific frequency band is N and the number of scheduled (P)RBs is greater than N, whether or not Z or X is applied to message 3 transmission or message 1 transmission in a PRACH procedure may depend on the number of PRBs allocated for a message 2. In addition, Z or X may have at least one value excluding 0 and may have a plurality of values. Herein, in case Z or X has a plurality of values, a plurality of different values may be designated to SCS and/or different ranges as many as allocated PRBs. In addition, according to BW or SCS, a K2 value may be suitably signaled, and at this time a new default TDRA table may be used or an offset may be applied. Herein, when a plurality of X values are designated, a plurality of offset values may be determined or a single offset value corresponding to greatest delay may be defined.

$$Z = F \text{ (Floor ((number of allocated PRBs) / (number of PRBs corresponding to specific MHz BW)),}$$
$$SCS) \ X = F \text{ (Floor ((number of allocated PRBs) / (number of PRBs corresponding to specific MHz} \quad \text{[Equation 4]}$$
$$BW)), SCS)$$

Here, SCS is 15 KHz or 30 KHz.

- Embodiment #4-1: SCS may not be used as an input for a function that determines Z or X. In case a value is determined based on whether or not the number of allocated PRBs is equal to or smaller than the number of PRBs corresponding to a specific BW, X and Z may have one value except 0.
- Embodiment #4-2: in case a TDRA table is used in Embodiment #2, depending on SCS, an offset may be applied to at least some of S values. Herein, the offset should be defined so that an indicated resource range does not cross a corresponding slot boundary even when the offset is applied to the S value of Table 6 and an L value is applied. In addition, the offset may be predefined or be indicated through an SIB1. Alternatively, the offset may be indicated using bits that are not used without extension of additional bits in an uplink grant of a message or may be indicated by a new field that is defined in DCI of RA-RNTI.
- Embodiment #4-3: in the case of a type 2 PRACH (e.g., 2-step PRACH), when a FallbackRAR is transmitted after a message B, an additional marginal time may be applied for a processing time of a terminal for a message 1 and a message 3. Herein, the additional marginal time may be processed like type 1 PRACH (e.g., 4-step PRACH), and the above-described embodiments may be applied regarding FallbackRAR transmission timing.

For diversity of Release-18, it is also possible to consider the emergence of a terminal that is capable of full scheduling of a unicast channel for a 20 MHz BW, has a peak data rate of PRB and 10 Mbps corresponding to 5 MHz BW, has an overall function similar to the RedCap terminal of Release-17, but is designed to have a max T-put of 10 Mbps, not 50 Mbps. In this case, the following schemes may be applied to embodiments about X value or offset and update of tables such as various embodiments belonging to Embodiment #1 to Embodiment #3.

- Embodiment #4-4: for a 3GPP release-18 eRedCap terminal that is capable of unicast scheduling of 20 MHz BW and has a peak data rate of 10 Mbps, a 4-step PRACH procedure with the above-described embodiments being applied thereto may be operated.
- Embodiment #4-5: for a 3GPP release-18 eRedCap terminal that is capable of unicast scheduling of 20 MHz BW and has a peak data rate of 10 Mbps, the above-described embodiments may not be applied, and a 4-step RACH procedure may be applied in the same way as the RedCap terminal of Release-17.

The above-described embodiments may be applied only to an operation in a specific initial BWP.

- Embodiment #4-6: Settings about X value, table update, offset and the like may be predefined in relation to a specific initial BWP or be indicated by signaling through RRC SIB.

Additionally, in the above-described embodiments, in case a message 3 is transmitted after a X value is applied, a high layer may not sufficiently consider a transmission time of PUSCH but transmit a message 3 before decoding of a message 2 is completed. In this case, RACH failure is determined, and a message 1 may be immediately retransmitted accordingly.

- Embodiment #4-7: as for a processing time X (e.g., 0 or another value) of a message 2, before a message 3 transmission time, in case processing of the message 2 is not completed due to lack of decoding time, RACH failure is determined, and a message 1 is retransmitted. In this case, Embodiment #3 may be applied.

The above-described embodiments may be applied only when a specific initial BWP is configured.

- Embodiment #4-8: operations of X value application, offset application, relevant table update and the like may be predefined to be performed only in a specific initial BWP or may be configured by RRC SIB signaling.

The present disclosure described a method of adding a margin for a processing time of a terminal according to the number of PRBs allocated for a PDSCH of a message 2. In case early indication is configured, a base station may know through a corresponding preamble whether or not an eRedCap terminal has attempted a RACH procedure. However, in case early indication is not allocated or configured, the base station cannot know whether a terminal transmitting the preamble is an eRedCap terminal or not. In this case, FDRA of a RAR for a message 3 may allocate PRBs equal to or greater than the number of PRBs corresponding to a 5 MHz BW. In case the FDRA of the RAR for the message 3 allocates PRBs equal to or greater than the number of PRBs corresponding to the 5 MHz BW, the eRedCap terminal may not transmit the message 3 but process the situation as RACH failure and attempt retransmission of the message 1.

In Release-18, eRedCap classifies two types of terminals: the one includes terminals having a feature that the number of PRBs corresponding to a 20 MHz BW can be processed in a unicast PDSCH, and the other includes terminals having a feature that only the number of PRBs corresponding to a 5 MHz BW can be processed for the above-described unicast PDSCH. The present disclosure has mainly addressed the feature related to the latter. However, the two types of terminals do not show any difference in an initial access process of a PRACH procedure, but an indication parameter regarding any one of the two features may be delivered through a RRCsetupcomplete RRC message. Thus, before UE capability report, a terminal, which supports a unicast PDSCH with the number of PRBs corresponding to a 20 MHz BW, may be subject to PDSCH scheduling suitable for its capability. In addition, in the case of a terminal which has a feature of capability of processing a unicast PDSCH up to the number of PRBs corresponding to the 20 MHz BW, if a message 1-early indication is set for both uses of Release-18 eRedCap and of Release-17 RedCap, the terminal may use the early indication for one of the two uses.

Release-18 eRedCap terminals may be divided into two types: the one type with allocation of a unicast PDSCH limited to a 5 MHz BW and the other type with allocation of every channel limited to a 20 MHz BW like in Release-17. Accordingly, in an initial access process, a base station cannot distinguish between the two types. It is because UE capability information may be reported after a RRC-idle state of a RACH procedure transitions to a RRC-connected state. As a type is difficult to identify before the RRC-connected state, for a PDSCH that is a unicast channel (e.g., channels scheduled by a PDCCH using TC-RNTI and C-RNTI) of a message 3, a message 4 and the like that may be a type of PDSCH of unicast, a base station needs to limit resource allocation for the two types within a range of 5 MHz BW. However, in a RRC-inactive state or a RRC-connected state, the limit of resource allocation does not have to be performed. Accordingly, according to a RRC state, a limit of BW may be applied in a RACH procedure. In addition, in the case of a RACH partition for selecting a RACH preamble, a setting may be selected within a feature combination of Release-17 RedCap. Hereinafter, in the present disclosure, for a unicast-related PDSCH, a terminal type with allocation limited within the number of PRBs corresponding to a 5 MHz BW will be referred to as a first type, and a terminal type allowing scheduling above the number of PRBs corresponding to the 5 MHz BW will be referred to as a second type.

- Embodiment #4-9: for a message 3 or a message 4 of a first type terminal or a second type terminal in a RRC-idle state, a same PDSCH BW may be applied as a limit of resource allocation during a RACH procedure. In addition, in a RRC-inactive state or a RRC-connected state, an allocation limit may be applied likewise to a frequency resource.
- Embodiment #4-10: in a RRC-inactive state or a RRC-connected state, for a message 3 or a message 4 in a RACH procedure, PRBs exceeding the number of PRBs corresponding to a 5MHz BW may be allocated to a second type terminal.

In the case of a message A PUSCH in a 2-step RACH, no problem may occur in allocating PRBs exceeding the number of PRBs corresponding to a 5MHz BW. Accordingly, for a first type terminal, in case a resource exceeding the number of PRBs corresponding to the 5MHz BW is allocated for the message A PUSCH, various embodiments of error handling, which are applicable in preparation for excess allocation, may not be applied.

In case a message B PDSCH of a 2-step RACH is scheduled by C-RNTI or MsgB-RNTI, for a RRC-inactive or RRC-connected state, PRBs exceeding the number of PRBs corresponding to the 5MHz BW may be allocated.

Like in Embodiment #4-9 and Embodiment #4-10, whether or not an allocation limit to the number of PRBs corresponding to a max scheduled transmission BW of a second type terminal applied in a RRC-inactive state or a RRC-connected state will be likewise applied in a RRC-idle state may be set by high layer signaling. In other words, whether or not the number of PRBs with limited allocation in the RRC-idle state is equal to the number of PRBs with limited allocation in the RRC-inactive state or the RRC-connected state may be set by high layer signaling.

For the second type, in a RRC-connected state or an inactive state, early indication sharing of a Release-17 RedCap terminal may be performed in RACH partitioning. In case early indication is set for both Release-18 eRedCap and Release-17 eRedCap, a second type terminal may share a Release-17 early indication. Thus, in the second type terminal, the above-described various problems, which may occur due to a BW restriction for unicast in a RACH procedure, may be avoided.

- Embodiment #4-11: in case early indication is set for both R17 RedCap and Release-18 eRedCap, a terminal may operate as follows.

In a RRC-idle state, even in the case of a second type terminal, the terminal may use a RACH resource corresponding to a feature combination related to early indication of Release-18 eRedCap to transmit a RACH preamble.
In a RRC-inactive state or RRC-connected state, the second type terminal may use a RACH resource corresponding to a feature combination related to early indication of Release-17 RedCap to transmit a RACH preamble.
In case early indication is set for both R17 RedCap and Release-18 eRedCap, which early indication will be used in the RRC-inactive state or the RRC-connected state may be set by high layer signaling.
As for a RACH feature priority, in the RRC-inactive state or the RRC-connected state, the second type terminal may select a feature combination according to a feature priority related to R17 RedCap early indication.
Even if early indication is set for Release-18 eRedCap, a feature combination may be selected according to a feature priority.
In case early indication for Release-18 eRedCap is not set, if Release-17 RedCap early indication is set for at least one of first type and second type, a feature combination may be selected according to a feature priority of the Release-17 RedCap early indication.
In case a PDSCH for a message 2 or a message B is scheduled to exceed the number of PRBs corresponding to a 5 MHz BW, processing time relaxation applied herein may be differently applied according to SCS. For example, a marginal time may be defined with difference of 1 slot time interval. Herein, for a second type terminal operating in a RRC-inactive state or a RRC-connected state, the processing time relaxation may not be applied.
In preparation for a general device of a device that should support up to 100 MHz in 5G, a Redcap device of Release-17 has a maximum bandwidth of 20 MHz. The Redcap device has been introduced as a technology that is simple in components or operation and is capable of saving much cost. The present disclosure proposes a technology that does not cause significant modification and is capable of saving additional cost with respect to buffer size or memory. Specifically, in order to achieve low cost in PRACH processing, the present disclosure proposes a technology regarding whether or not a terminal with a structure of PxSCH capable of small data processing is operated in a Type 2 PRACH (e.g,, a 2-step PRACH). Through the proposed technology of the present disclosure, as a certain degree of relaxation is given to a process of a terminal, an advantageous effect on power consumption may occur, and the amount of buffer for data processing may be designed to be small, so that a good feature of memory utilization will occur. Accordingly, a terminal according to the present disclosure may maintain a processing capability of PxSCH of unicast, process data with a BW exceeding the number of PRBs corresponding to a 5 MHz BW even by small performance, and furthermore enable a small-size design advantageous in power consumption and cost to be expected.
Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).
Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1.    A method performed by a terminal in a wireless communication system, the method comprising:

     transmitting a message 1 for a random access procedure;
     receiving downlink control information (DCI) that schedules a message 2;
     receiving a physical downlink shared channel (PDSCH) scheduled by the DCI through physical resource blocks (PRBs) allocated by the DCI;
     in case that failure of a physical random access channel (PRACH) procedure is determined based on a situation related to the message 2, transmitting a PRACH no later than a first time length after a last symbol of the PDSCH; and
     in case that the PDSCH includes a random access response (RAR) message including a uplink grant that schedules a physical uplink shared channel (PUSCH), transmitting a message 3 through the PUSCH so that a time between the last symbol of the PDSCH and a first symbol of the message 3 is not smaller than a second time length,
     wherein a first number of PRBs allocated by the DCI is larger than a second number of PRBs corresponding to a max scheduled transmission bandwidth of the terminal.

2.    The method of claim 1, wherein the first time length is selected among a plurality of values based on a failure cause of the PRACH procedure.

3.    The method of claim 2, wherein the first time length is determined as a first value, based on a transport block provided by the PDSCH not being rightly received or a random access preamble identifier (RAPID) associated with physical random access channel (PRACH) transmission not being identified, and
     wherein the first time length is determined as a second value smaller than the first value, based on decoding failing in the PDSCH.

4.    The method of claim 1, wherein the second time length is selected among a plurality of values based on SCS.

5.    The method of claim 4, wherein the terminal is a device that has a limit of the max scheduled transmission bandwidth,

     wherein the plurality of values includes a first value for 15 KHz SCS and a second value for 30 KHz SCS,
     wherein the first value is larger by a first difference value than a time duration value that is applied for transmission of the message 3 according to RAR reception of a device without the limit of the max scheduled transmission bandwidth,
     wherein the second value is larger by a second difference value than the time duration value that is applied for the transmission of the message 3 according to success RAR reception of the device without the limit of the max scheduled transmission bandwidth, and
     wherein the first difference value is defined to be twice the second difference value.

6.    The method of claim 1, wherein each of the first time length and the second time length is determined based on at least one of the first number of PRBs allocated by the DCI and the second number of PRBs corresponding to the max scheduled transmission bandwidth among a plurality of values.

7.    The method of claim 1, wherein the transmitting of the message 3 through the PUSCH further comprises identifying a slot including the PUSCH, and
     wherein the slot is determined based on a first offset that is set through high layer signaling, a second offset that corresponds to SCS of the PUSCH, and a third offset according to a BW of the PUSCH exceeding the max scheduled transmission BW of the terminal.

8. The method of claim 7, wherein the third offset is determined based on the SCS of the PUSCH.

9. A terminal in a wireless communication system, the terminal comprising:

a transceiver; and
a processor coupled with the transceiver,
wherein the processor is configured to:

transmit a message 1 for a random access procedure,
receive downlink control information (DCI) that schedules a message 2,
receive a physical downlink shared channel (PDSCH) scheduled by the DCI through physical resource blocks (PRBs) allocated by the DCI,
transmit a PRACH no later than a first time length after a last symbol of the PDSCH, in case that failure of a physical random access channel (PRACH) procedure is determined based on a situation related to the message 2, and
transmit a message 3 through a physical uplink shared channel (PUSCH) so that a time between the last symbol of the PDSCH and a first symbol of the message 3 is not smaller than a second time length, in case that the PDSCH includes a random access response (RAR) message including a uplink grant that schedules the PUSCH,
wherein a first number of PRBs allocated by the DCI is larger than a second number of PRBs corresponding to a max scheduled transmission bandwidth of the terminal.

10. A communication device comprising:

at least one processor; and
at least one computer memory coupled with the at least one processor and storing an instruction that instructs operations when executed by the at least one processor,
wherein the operations comprises:

transmitting a message 1 for a random access procedure;
receiving downlink control information (DCI) that schedules a message 2;
receiving a physical downlink shared channel (PDSCH) scheduled by the DCI through physical resource blocks (PRBs) allocated by the DCI;
in case that failure of a physical random access channel (PRACH) procedure is determined based on a situation related to the message 2, transmitting a PRACH no later than a first time length after a last symbol of the PDSCH; and
in case that the PDSCH includes a random access response (RAR) message including a uplink grant that schedules a physical uplink shared channel (PUSCH), transmitting a message 3 through the PUSCH so that a time between the last symbol of the PDSCH and a first symbol of the message 3 is not smaller than a second time length,
wherein a first number of PRBs allocated by the DCI may be larger than a second number of PRBs corresponding to a max scheduled transmission bandwidth of the terminal.

11. A non-transitory computer-readable medium storing at least one instruction, the non-transitory computer-readable medium comprising the at least one instruction that is executable by a processor,
wherein the at least one instruction instructs a device to:

transmit a message 1 for a random access procedure,
receive downlink control information (DCI) that schedules a message 2,
receive a physical downlink shared channel (PDSCH) scheduled by the DCI through physical resource blocks (PRBs) allocated by the DCI,
transmit a PRACH no later than a first time length after a last symbol of the PDSCH, in case that failure of a physical random access channel (PRACH) procedure is determined based on a situation related to the message 2, and
transmit a message 3 through a physical uplink shared channel (PUSCH) so that a time between the last symbol of the PDSCH and a first symbol of the message 3 is not smaller than a second time length, in case that the PDSCH includes a random access response (RAR) message including a uplink grant that schedules the PUSCH, wherein a first number of PRBs allocated by the DCI is larger than a second number of PRBs corresponding to a max scheduled transmission bandwidth of the terminal.

**FIG. 1**

200

208

202                                    206

First Device

Processor(s)    Transceiver(s)

Memory(s)

204

# FIG. 2

Radio Frame 10ms

Subframe 1ms

| 0 | 1 | 2 | 3 | 4 | 5 | 6 | 7 | 8 | 9 |

Fixed Size

Subframe={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbol

**FIG. 3**

**FIG. 4**

**FIG. 5**

**FIG. 6**

**FIG. 7**

EP 4 669 010 A1

TERMINAL                                          BASE STATION

| Random Access Request(MSG1) |

| Random Access Response(MSG2) |

| UL Scheduled Transmission(MSG3) |

| Contention Resolution(MSG4) |

## FIG. 8A

TERMINAL                                          BASE STATION

| RA Preamble Assignment |

| Random Access Request(MSG1) |

| Random Access Response(MSG2) |

## FIG. 8B

**FIG. 9**

MAC Sub header — E(1 bit) R(1 bit) R(1 bit) | Back of Indicator (4 bit) | E(1 bit) T(1 bit) | RAPID (4 bit) | R(1 bit)

MAC Sub header — Timing Advance (12 bit)

MAC Payload for Random Access Response — UL_Grant (27 bit) | Temp C-RNTI (16 bit)

902

**FIG. 10**

Uplink Grant (27 bits)

1002

902

Freq Hopping Flag (1 bit) | MSG3 PUSCH Freq Resource (14 bit) | MSG3 PUSCH Time Resource (4 bit) | MCS (4 bit) | TPC for MSG3PUSCH (3 bit) | CSI Request (1 bit)

START

S1101

RECEIVE MESSAGE 2

S1103

DETERMINE PROCESSING
TIME FOR MESSAGE 2

S1105

TRANSMIT PUSCH AFTER
PROCESSING TIME

END

**FIG. 11**

START

S1201

RECEIVE MESSAGE 2

S1203

DETERMINE MESSAGE 3
TRANSMISSION TIME

S1205

TRANSMIT MESSAGE 3

END

**FIG. 12**

START

S1301

DETERMINE RACH FAILURE

S1303

DETERMINE PREAMBLE
RETRANSMISSION TIME

S1305

TRANSMIT PREAMBLE

END

**FIG. 13**

## INTERNATIONAL SEARCH REPORT

| International application No. |
|---|
| **PCT/KR2024/095339** |

### A. CLASSIFICATION OF SUBJECT MATTER

**H04W 74/08**(2009.01)i; **H04W 74/00**(2009.01)i; **H04W 72/04**(2009.01)i; **H04W 72/0457**(2023.01)i; **H04W 72/23**(2023.01)i; **H04L 27/26**(2006.01)i; **H04W 88/02**(2009.01)i

According to International Patent Classification (IPC) or to both national classification and IPC

### B. FIELDS SEARCHED

Minimum documentation searched (classification system followed by classification symbols)

H04W 74/08(2009.01); H04L 1/08(2006.01); H04L 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 억세스(random access), 메시지(message), 스케줄링(scheduling), DCI(downlink control information), PRB(physical resource block), PDSCH(physical downlink shared channel), PRACH(physical random access channel), 심볼(symbol), RAR(random access response), 대역폭(bandwidth)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0148973 A (SAMSUNG ELECTRONICS CO., LTD.) 08 December 2021 (2021-12-08)<br>See paragraphs [0009] and [0017]-[0028]; claims 1-12; and figure 1a. | 1-11 |
| A | ZTE et al. Remaining issues of the 2-step RACH procedures. R1-2000397, 3GPP TSG RAN WG1 Meeting #100, e-Meeting. 14 February 2020.<br>See pages 1-5. | 1-11 |
| A | ZTE et al. Discussion on further UE complexity reduction. R1-2211902, 3GPP TSG RAN WG1 #111. Toulouse, France. 07 November 2022.<br>See sections 1-3. | 1-11 |
| A | WO 2021-231816 A1 (CONVIDA WIRELESS, LLC) 18 November 2021 (2021-11-18)<br>See paragraphs [0003]-[0005]; and claims 1-16. | 1-11 |
| A | JP 2022-549266 A (TELEFONAKTIEBOLAGET LM ERICSSON (PUBL)) 24 November 2022 (2022-11-24)<br>See paragraphs [0004]-[0035]; and claims 1-38. | 1-11 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **23 May 2024** | **23 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/095339**

| Patent document cited in search report | | | Publication date (day/month/year) | Patent family member(s) | | | Publication date (day/month/year) |
|---|---|---|---|---|---|---|---|
| KR | 10-2021-0148973 | A | 08 December 2021 | CN | 109479317 | A | 15 March 2019 |
| | | | | CN | 109479317 | B | 23 June 2023 |
| | | | | CN | 116567832 | A | 08 August 2023 |
| | | | | CN | 116684974 | A | 01 September 2023 |
| | | | | EP | 3471491 | A1 | 17 April 2019 |
| | | | | EP | 3471491 | B1 | 06 October 2021 |
| | | | | EP | 3955687 | A1 | 16 February 2022 |
| | | | | EP | 3955687 | B1 | 21 June 2023 |
| | | | | EP | 4236561 | A2 | 30 August 2023 |
| | | | | EP | 4236561 | A3 | 18 October 2023 |
| | | | | KR | 10-2018-0007648 | A | 23 January 2018 |
| | | | | KR | 10-2018-0007653 | A | 23 January 2018 |
| | | | | KR | 10-2332992 | B1 | 01 December 2021 |
| | | | | US | 11202235 | B2 | 14 December 2021 |
| | | | | US | 11653272 | B2 | 16 May 2023 |
| | | | | US | 2019-0239123 | A1 | 01 August 2019 |
| | | | | US | 2022-0095172 | A1 | 24 March 2022 |
| | | | | US | 2023-0284098 | A1 | 07 September 2023 |
| | | | | WO | 2018-012899 | A1 | 18 January 2018 |
| WO | 2021-231816 | A1 | 18 November 2021 | CN | 115553043 | A | 30 December 2022 |
| | | | | EP | 4151038 | A1 | 22 March 2023 |
| | | | | US | 2023-0188261 | A1 | 15 June 2023 |
| JP | 2022-549266 | A | 24 November 2022 | CN | 114451058 | A | 06 May 2022 |
| | | | | EP | 4035488 | A1 | 03 August 2022 |
| | | | | MX | 2022003411 | A | 18 April 2022 |
| | | | | US | 2022-0369376 | A1 | 17 November 2022 |
| | | | | WO | 2021-057793 | A1 | 01 April 2021 |